# EUROPÄISCHE PATENTSCHRIFT

(11) **EP 1 184 117 B1**
(45) Veröffentlichungstag und Bekanntmachung des Hinweises auf die Patenterteilung: **12.05.2004**
(21) Anmeldenummer: 01120314.8
(22) Anmeldetag: 24.08.2001
(51) Int. Cl.: B23C 5/10, B23C 5/22

(54) **Zerspanungswerkzeug mit direkter Schneidplattenanlage**
Cutting tool with mutual support of cutting inserts
Outil de coupe avec support mutuel des plaquettes de coupe

(30) Priorität: 01.09.2000 DE 10043015
(43) Veröffentlichungstag der Anmeldung: 06.03.2002
(73) Patentinhaber: WALTER AG, 72072 Tübingen (DE)
(72) Erfinder: Villa, Stefano, 22100 Como (IT)
(74) Vertreter: Rüger, Barthelt & Abel Patentanwälte

(56) Entgegenhaltungen:
- US-A- 4 790 693
- US-A- 5 586 843

## Beschreibung

Die Erfindung betrifft ein Zerspanungswerkzeug, insbesondere ein zur Fräsbearbeitung oder zur bohrenden Werkstückbearbeitung eingerichtetes Zerspanungswerkzeug.

Zur spanenden Bearbeitung von Werkstücken sind Zerspanungswerkzeuge in Gebrauch, die einen Werkzeugkörper mit mehreren, lösbar an diesem befestigten Schneidplatten aufweisen. Die Schneidplatten sind in der Regel auswechselbar und weisen eine große Härte und Verschleißfestigkeit auf. Der Werkzeugkörper hingegen hält und führt die Schneidplatten an entsprechenden Plattensitzen. Häufig. sollen die zur spanenden Bearbeitung wirksamen Schneidkanten eine Länge aufweisen, die größer ist als die Länge einer einzelnen Schneidplatte. Die gewünschte Schneide wird dann durch die Schneidkanten mehrerer Schneidplatten zusammengesetzt, die an den Werkzeugkörper so angeordnet sind, dass sie sich in Umfangsrichtung jeweils etwas überlappen.

Insbesondere bei Umfangsfräsern sind die Schneidplatten in mehreren Spannuten auf einer Schraubenlinie hintereinander angeordnet. Dabei sind die in aufeinanderfolgenden Spannuten angeordneten Schneidplatten in Axialrichtung so gegeneinander versetzt, dass in der Summe wiederum eine vollständige Schneide entsteht. Es sind dann jedoch zwei Spannuten erforderlich, um eine einzige vollständige Umfangsschneide auszubilden.

Aus der US-A-4790693 ist ein Zylinderfräser mit mehreren Spannuten bekannt, in denen Schneidplatten mit radialer Orientierung angeordnet sind. Die Schneidplatten sind in Draufsicht im Wesentlichen rechteckig ausgebildet, wobei sie an ihren einander zugewandten Seitenflächen mit einer Taille oder Ausnehmung versehen sind. In diese Ausnehmungen greifen die jeweils benachbarten Schneidplatten, ohne dass die Schneidplatten sich gegenseitig berühren und abstützen. Für jede Spannut ergibt sich eine durchgehende Schneide.

Gemäß der US-A-5586843 ist es auch versucht worden, bei einem Fräswerkzeug mit tangential angeordneten Schneidplatten die Schneidplatten einer Spannut seitlich an einander anstoßend anzuordnen. Die Hauptschneidkanten der Schneidplatten haben zu ihren Seitenflächen hin jeweils eine kleine Abschrägung oder Facette. Damit gelingt es, mit den Schneidplatten einer einzigen Spannut, bis auf kleine dreieckige Lücken, eine nahezu vollständige Schneide auszubilden. Hat ein solches Zerspanungswerkzeug bspw. vier Spannuten, weist es vier nahezu vollständige Umfangsschneiden auf. Damit lassen sich hohe Zerspanungsleistungen erreichen. Allerdings wird der sich ergebende Spiralwinkel, den die in der Spannut hintereinander angeordneten Schneidplatten definieren, relativ flach. Der Spiralwinkel ist der Winkel, den die Reihe der Schneidplatten mit der Werkzeugachse einschließt. Dagegen ist der Steigungswinkel als der Winkel festgelegt, den die Reihe der Schneidplatten mit der Umfangsrichtung einschließt. Der Steigungswinkel ist groß (nahezu 90°). Dies ist in einigen Fällen nicht erwünscht. Außerdem ist die axiale Abstützung der Schneidplatten kompliziert.

Noch schwieriger ist die Gestaltung von durchgehenden Schneidkanten an der Werkzeugstirn bei Bohrwerkzeugen, deren Radius größer ist als die Länge einer verfügbaren Schneidplatte. Sollen an der Werkzeugstirn z.B. zwei einander überlappende Schneidplatten vorgesehen werden, führen die dazu erforderlichen Plattensitze zu einer erheblichen Schwächung des Werkzeugkörpers. Werkzeuge mit mehr als einer Stirnschneide (z.B. mit vier Schneidplatten zur Erzeugung von zwei Stirnschneiden) können so kaum hergestellt werden.

Davon ausgehend ist es Aufgabe der Erfindung, ein Zerspanungswerkzeug zu schaffen, das bei einfacher Gestaltung eine hohe Zerspanungsleistung ermöglicht.

Diese Aufgabe wird mit dem Zerspanungswerkzeug nach Anspruch 1 gelöst.

Das erfindungsgemäße Zerspanungswerkzeug weist einen Werkzeugkörper mit Plattensitzen auf, die so angeordnet und ausgebildet sind, dass benachbarte Schneidplatten einander mit ihren Seitenflächen berühren, so dass ihre Schneidkanten einander überschneiden. Die gegenseitige Berührung der Schneidplatten untereinander schafft eine Abstützung der Schneidplatten bei gleichzeitig einfacher Gestaltung der Plattensitze. Die Funktion der seitlichen oder axialen Abstützung einer Schneidkante übernimmt dann jeweils die benachbarte Schneidplatte. Damit ist an den betreffenden Plattensitzen an dieser Stelle des Plattensitzes keine dem Plattensitz zugehörige Abstützfläche erforderlich. Dadurch kann dieser hier besonders einfach gestaltet werden.

Diese Plattensitze beanspruchen wenig Platz und schwächen den Werkzeugkörper wenig. Es können somit auf einfache Weise relativ viele Schneidplatten an der Werkzeugstirn angeordnet werden.

Durch die unmittelbare Anlage der Schneidplatten in Axialrichtung aneinander ergibt sich außerdem ein relativ großer Steigungswinkel, den die Reihe der Schneidplatten in jeder Spannut festlegt. Dies kommt der Stabilität des Werkzeugkörpers zugute, der somit durch.die entsprechenden Spannuten wenig geschwächt wird. Auch dies kann der Zerspanungsleistung zugute kommen, entweder indem der Werkzeugkörper hohen Belastungen gewachsen ist oder, indem an dem Werkzeugkörper eine besonders große Zahl von Spannuten vorgesehen wird, die dann eine große Zähnezahl (Schneidenzahl, d.h. Zahl vollständiger Schneiden) ergeben.

Bei der erfindungsgemäßen Anordnung wird außerdem sichergestellt, dass die Überlappung aneinander anschließender Schneidkanten relativ gering ist. Dies hat eine gleichmäßige Spandicke entlang jeder Schneidkante zur Folge. Damit kann jeder Punkt der Schneidkante, jeder Schneidplatte optimal belastet werden, d.h. weder überlastet noch zu gering belastet werden, so dass die Leistungsfähigkeit der Schneidplatten maximal ausnutzbar ist.

Die Plattensitze können Auflageflächen aufweisen, die auf gleicher Höhe angeordnet sind, so dass die Schneidkanten benachbarter Schneidplatten unmittelbar aneinander anschließen. Hier besteht jedoch unter Umständen die Gefahr, dass sich zwischen den Schneidplatten Späne einklemmen. Diese wird vermieden, wenn die Schneidplatten einander wenigstens geringfügig übergreifen. Erreicht werden kann dies durch Verwendung unterschiedlich dicker Schneidplatten oder besser durch einen Versatz der Auflageflächen der Plattensitze gegeneinander bezüglich einer zu der Auflagefläche rechtwinkligen Richtung (Umfangsrichtung). Der Versatz der Auflageflächen soll jedoch möglichst geringer sein als die Dicke der Schneidplatten, so dass benachbarte Schneidplatten einander berühren können, um sich abzustützen. Dabei wird insbesondere bevorzugt, den Abstand der Auflageflächen benachbarter Plattensitze am Außenumfang des Schneidwerkzeugs auf ein solches Maß zu begrenzen, dass die Schneidplatten auch an ihrer radial äußeren Grenze eine ausreichende Berührung haben.

Bei radial aneinander anschließenden Schneidplatten gilt entsprechendes - auch hier kann entweder mit unterschiedlich dicken Schneidplatten oder mit einem Versatz der Auflageflächen gearbeitet werden, um zu erreichen, dass sich die Stirnschneidkanten des Werkzeugs überlappen.

Es wird als vorteilhaft angesehen, die zur Abstützung der Schneidplatten dienenden Seitenflächen der Schneidplatten in.Bereiche zu unterteilen, von denen einer als Anlagebereich dient. Der Anlagebereich kann im Extremfall die ganze Seitenfläche einnehmen, insbesondere wenn die Schneidplatten unterschiedlich dick sind. Vorzugsweise nimmt der Anlagebereich jedoch lediglich einen Teil der Seitenfläche ein, wobei der Anlagebereich dann vorzugsweise parallel zu der entsprechenden Seitenfläche der benachbarten Schneidplatte orientiert ist. Dies ist erreichbar, indem der Winkel zwischen dem Anlagebereich und der Vorderseite der einen Schneidplatte mit dem Winkel zwischen der Seitenfläche und der Grundfläche der anderen Schneidplatte übereinstimmt.

Die sich'ergebende Berührungsebene zwischen den Schneidplatten ist vorzugsweise zu der Auflagefläche des Plattensitzes in einem Winkel orientiert, der von einem rechten Winkel verschieden ist. Durch diese Neigung der Berührebene lässt sich eine geringfügige Überlappung benachbarter Schneidkanten erreichen, die gerade so groß ist, dass der Schnitt der Schneidkante einer Schneidplatte absatzlos in den Schnitt der Schneidkante der benachbarten Schneidplatte übergeht.

Zwischen den Schneidplatten kann sowohl eine Flächenberührung, als auch eine Linienberührung vorhanden sein. Die Flächenberührung wird hinsichtlich der Übertragung von auf die Schneidplatte einwirkenden Schnittkräften als vorteilhaft angesehen.

Weitere Einzelheiten vorteilhafter Ausführungsformen der Erfindung ergeben sich aus der Zeichnung oder der Beschreibung oder sind zumindest teilweise Gegenstand von Unteransprüchen.

In der Zeichnung sind Ausführungsbeispiele der Erfindung veranschaulicht. Es zeigen:
Fig. 1 ein erfindungsgemäßes, als Bohrnutenfräser ausgebildetes Zerspanungswerkzeug, in Seitenansicht,
Fig. 2 das Zerspanungswerkzeug nach Figur 1, in einer um 90° gedrehten schematisierten Seitenansicht,
Fig. 3 das Zerspanungswerkzeug nach den Figuren 1 und 2, in einer Ansicht seiner Stirnseite,
Fig. 4 eine linksspiralige Ausführungsform eines Zerspanungswerkzeugs, in Seitenansicht,
Fig. 5 eine rechtsspiralige Ausführungsform eines Zerspanungswerkzeugs, mit einheitlichen Schneidplatten in einer Spannut und einer zusätzlichen Stirnschneidplatte, und
Fig. 6 eine Schneidplatte für ein Zerspanungswerkzeug nach den Figuren 1 bis 5.

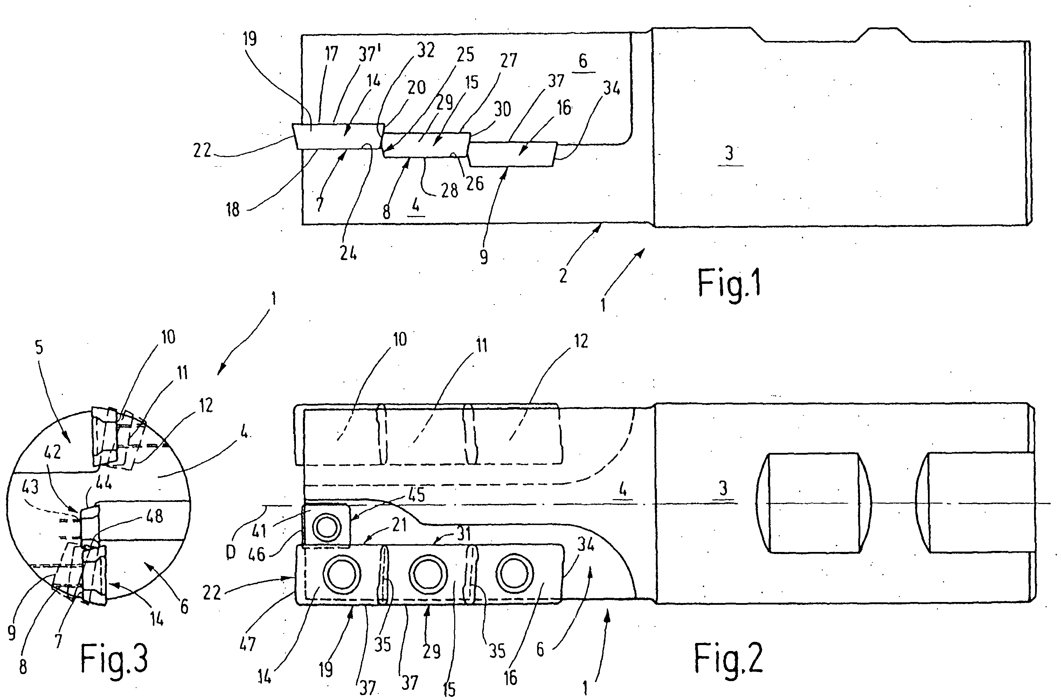

In Figur 1 ist ein Zerspanungswerkzeug 1 veranschaulicht, das einen Werkzeugkörper 2 mit einem Einspannteil 3 und eine Schneidplattenträgerabschnitt 4 aufweist. Letzterer geht von einer etwa zylindrischen Grundgestalt aus und weist mehrere, im konkreten Ausführungsbeispiel zwei, Spannuten 5, 6 auf, die bspw. aus Figur 3 ersichtlich sind. Jede Spannut 5, 6 ist eine sich in Axialrichtung erstreckende Ausnehmung, in der mehrere Plattensitze 7, 8, 9 bzw. 10, 11, 12 angeordnet sind.

Die Spannuten 5, 6 und deren Plattensitze 10, 11, 12 bzw. 7, 8, 9 sind untereinander identisch und vorzugsweise symmetrisch zu einer Drehachse D des Werkzeugkörpers 2 angeordnet. Entsprechend bezieht sich die nachfolgende Beschreibung der Plattensitze 7, 8, 9 auch auf die Plattensitze 10, 11, 12.

Die Plattensitze 7, 8, 9 sind zur Halterung von Schneidplatten 14, 15, 16 eingerichtet. Diese sind Quadrat-, Rechteck- oder Parallelogrammplatten mit jeweils einer Vorderfläche 17, einer Grundfläche 18 und mehreren Seitenflächen 19, 20, 21, 22 bzw. 29, 30, 31, 32 (siehe Figur 1 und 2), die sich zwischen der Vorderfläche 17 und der Grundfläche 18 erstrecken. Die Grundfläche 18 ist bspw. als Planfläche ausgebildet, während die Vorderfläche 17 als Planfläche ausgebildet oder einer sonstigen Formgebung unterliegen kann. Bspw. können nicht weiter veranschaulichte Spanmulden oder sonstige Formelemente vorhanden sein.

Zu dem Plattensitz 7 gehört eine Auflagefläche 24, die als Planfläche ausgebildet ist und auf der die Schneidplatte 14 mit ihrer Grundfläche 18 aufliegt. Die Auflagefläche 24 erstreckt sich nahezu über die gesamte Grundfläche 18 der Schneidplatte 14 und endet bezüglich der Axialrichtung des Zerspanungswerkzeugs 1 unmittelbar an der Seitenfläche 20 der Schneidplatte 14. An dieser Stelle geht die Auflagefläche 24 mit einer Stufe 25 in eine weitere Auflagefläche 26 für die benachbarte Schneidplatte 15 über. Die von der Auflagefläche 26 aufsteigende Stufe 25 ist dabei an ihrer radial am weitesten außenliegenden Stelle weniger tief als die Dicke der Schneidplatte 15, die zwischen ihrer Vorderfläche 27 und ihrer Grundfläche 28 zu messen ist. Die radial innenliegende Seitenfläche 31 findet an einer entsprechenden Anlagefläche des Plattensitzes 8 ihre Seitenanläge. In Axialrichtung stützt sich die Schneidplatte 14 an der Schneidplatte 15 ab. Diese findet ihrerseits Anlage an der Schneidplatte 16, die mit der Schneidplatte 15 übereinstimmend ausgebildet ist. Zur Abstützung der Schneidplatte 16 dient eine axiale Seitenanlagefläche 34 des Plattensitz 9.

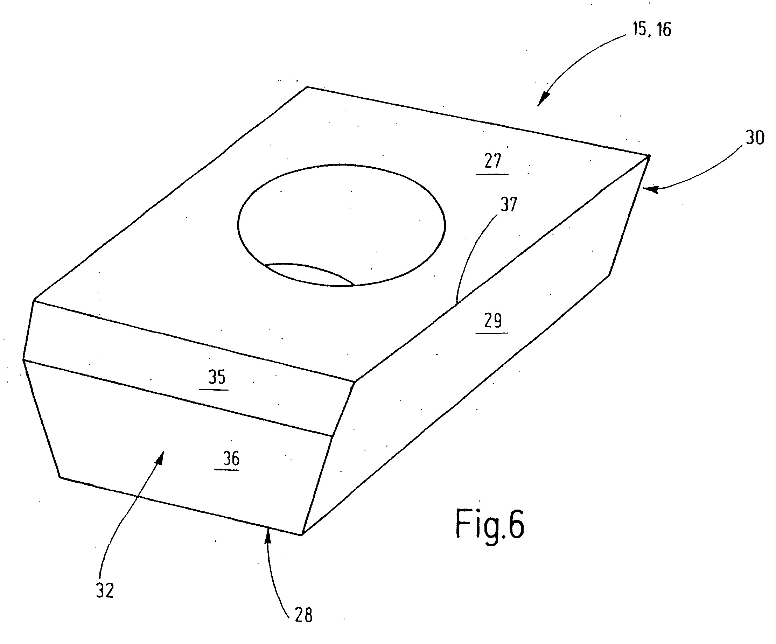

Die Schneidplatte 15, 16 ist in Figur 6 separat veranschaulicht. Wie dargestellt, ist die Seitenfläche 32 in zwei Bereiche 35, 36 unterteilt, wobei der Bereich 35 einen Anlagebereich bildet und unmittelbar an die Vorderfläche 27 anschließt. Der übrige Bereich 36 schließt an die Grundfläche 28 der Schneidplatte 15, 16 an. Die Bereiche 35, 36 schließen miteinander einen stumpfen Winkel ein. Außerdem stimmt der Winkel zwischen dem Bereich 35 und der Vorderfläche 27 im Wesentlichen mit dem Winkel überein, den die Seitenfläche 20 mit der Grundfläche 18 der benachbarten Schneidplatte 14 (siehe Figur 1) einschließt.

Die Schneidplatte 15, 16 weist eine Schneidkante 37 auf, die an dem Eckpunkt zwischen der Vorderfläche 27, dem Bereich 35 und der Seitenfläche 29 beginnt. Die Schneidkante 37 erstreckt sich dann etwa gerade bis zu dem Eckpunkt zwischen der Vorderfläche 27 und den Seitenflächen 29, 30. Eine entsprechende Schneidkante 37' ist an der benachbarten Schneidplatte 14 ausgebildet. Die Schneidkanten 37', 37 überlappen sich, wie Figur 2 veranschaulicht, in ihren Eckbereichen geringfügig, so dass sie lückenlos aneinander anschließen.

Bei dem Zerspanungswerkzeug nach Figur 2 ist in der Spannut 6 zusätzlich zu den Schneidplatten 14, 15, 16 eine Stirnschneidplatte 41 vorgesehen, die z.B. als Quadratplatte ausgebildet ist und, wie auch die anderen Schneidplatten 14, 15, 16, eine Befestigungsbohrung aufweist und an ihrem Plattensitz mittels einer Befestigungsschraube gehalten ist. Ihr Plattensitz 42 ist aus Figur 3 näher ersichtlich. Er weist eine radial orientierte plane Auflagefläche 43 auf, an die sich eine drehachsenseitige Seitenanlagefläche 44 anschließt. Außerdem kann eine aus Figur 2 ersichtliche axiale Seitenanlagefläche 45 vorgesehen sein. Die Auflagefläche 43 und die Seitenanlageflächen 44, 45 positionieren die Schneidplatte 41 so, dass sich ihre Stirnschneidkante 46 bis an die Drehachse D heran oder über diese hinaus erstreckt.

Die Auflagefläche 43 ist gegen die Auflagefläche 24 geringfügig versetzt. Sie kann jedoch mit dieser auch auf gleicher Höhe angeordnet sein. Dennoch überlappt sich ihre Stirnschneidkante 46 etwas mit einer stirnseitigen Schneidkante 47 der Schneidplatte 14. Dies aufgrund der unterschiedlichen Dicken der Schneidplatten 42, 14 und der Neigung der Seitenfläche 21 gegen die Grundfläche 18 der Schneidplatte 14. Die Schneidplatte 42 ist etwas dünner als die Schneidplatte 14 und hintergreift diese somit.

Die Schneidplatte 14 findet ihre drehachsenseitige Radialanlage, zumindest in ihrem vorderen Stirnbereich, an der Schneidplatte 42. Diese weist dazu einen in ihrer Neigung an die Seitenfläche 21 der Schneidplatte 14 angepassten Anlagebereich 48 auf, der eine Abstützfläche für die Schneidplatte 14 bildet. Diese ist somit sowohl in Axialrichtung als auch in Radialrichtung jeweils durch eine weitere Schneidplatte abgestützt.

Das insoweit beschriebene Zerspanungswerkzeug 1 ist ein Bohrnutenfräser, der durch die Schneidkanten 46, 47 stirnseitig eine vollständige Schneide bildet und zwei vollständige Umfangsschneiden aufweist. Dieser Bohrnutenfräser kann sowohl in Betrieb axial als auch radial bewegt (zugestellt) werden. Die Zerspanungsleistung ist insbesondere bei Fräsbearbeitungsvorgängen (radiale Zustellbewegung) infolge zweier vollständig ausgebildeter Umfangsschneiden groß. Nachdem der Versatz zweier in Axialrichtung aufeinanderfolgender Schneidplatten 14, 15 bzw. 15, 16 gegeneinander jeweils geringer ist als eine Plattendicke, ist ein relativ flacher Spiralwinkel ausgebildet, wodurch der Werkzeugkörper 2, insbesondere sein Schneidplattenträgerabschnitt 4 nur wenig geschwächt ist. Die Spannuten 5, 6 sind nahezu gerade.

Bei dem vorstehend beschriebenen Zerspanungswerkzeug 1 sind insgesamt drei verschiedene Schneidplattentypen verwendet worden, nämlich die Schneidplatten 15, 16, wie sie gesondert in Figur 6 veranschaulicht sind und bei denen eine der einander jeweils gegenüberliegenden Seitenflächen 30, 32 mit einem abgeschrägten Bereich (Anlagefläche 35) versehen ist. Ein weiterer Typ ist die Schneidplatte 14, bei der die einander gegenüberliegenden Seitenflächen 20, 22 untereinander gleich ausgebildet sind. Eine dritte Bauform ist die an der Drehachse D angeordnete Schneidplatte 41.

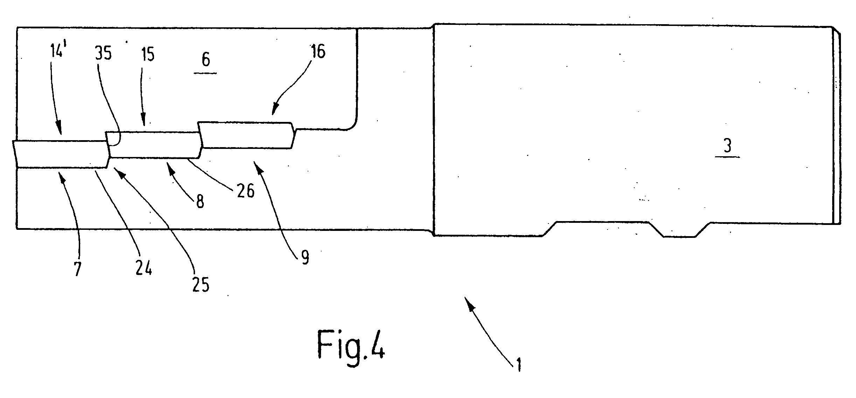

Es ist jedoch auch möglich, die Spannut 5 oder 6 mit drei gleichen Schneidplatten 14', 15, 16 zu bestücken, wenn die Plattensitze 7, 8, 9, wie in Figur 4 veranschaulicht, so angeordnet sind, dass sich ein linksspiraliges Zerspanungswerkzeug 1 ergibt. Der Unterschied liegt in der Ausbildung der Stufe 25. Bei der Ausführungsform des Zerspanungswerkzeugs 1 nach Figur 1 ist die Stufe 25 so orientiert, dass die Auflagefläche 26 des stirnferneren Plattensitzes bezüglich der Drehung des Zerspanungswerkzeugs 1 der Auflagefläche 24 des stirnnäheren Plattensitzes 7 nacheilt. Bei der Ausführungsform des Zerspanungswerkzeugs 1 nach Figur 4, sind die Verhältnisse umgekehrt. Die Stufe 25 ist so orientiert, dass die stirnfernere Auflagefläche 26 des Plattensitzes 8 der Auflagefläche 24 des stirnnäheren Plattensitzes 7 bezüglich der Drehung des Zerspanungswerkzeugs 1 voreilt.

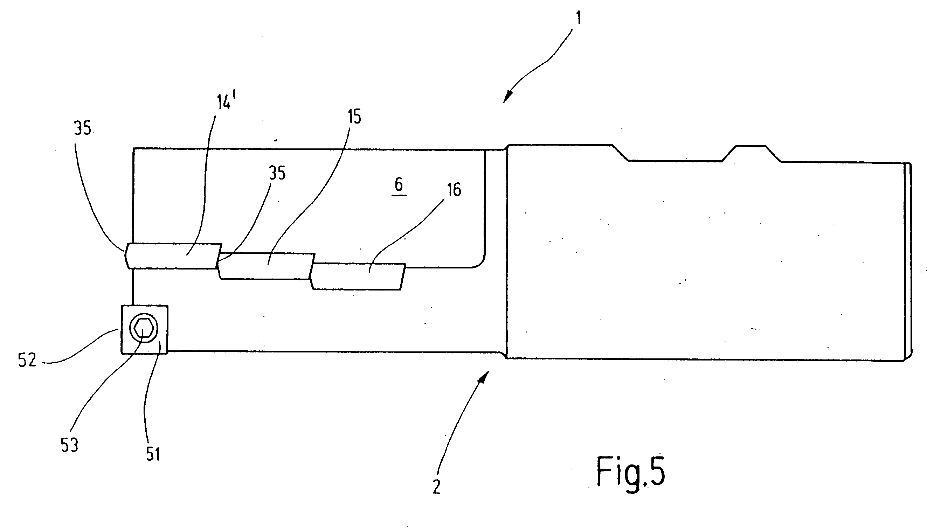

Darüber hinaus kann auch bei einem rechtsspiraligen Zerspanungswerkzeug 1 in einer Spannut 6 mit einheitlichen Schneidplatten 14', 15, 16 gearbeitet werden, wenn die stirnständige Schneidplatte 14' keine Stirnschneidkante aufweist, wie es in Figur 5 dargestellt ist. Der sonst als Anlagefläche dienende Bereich 35 der Schneidplatte 14' ist dann funktionslos. Wird eine Stirnschneidkante benötigt, kann diese an einer gesonderten Schneidplatte 51 vorgesehen sein. Diese bspw. als Quadratplatte ausgebildete Schneidplatte 51 ist an einem gesonderten Plattensitz vorgesehen und ragt axial weiter vor als die Schneidplatte 14. Ihre Stirnschneidkante 52 ist somit aktiv. Die Schneidplatte 51 ist als Radialplatte eingebaut, d.h. ihr Plattensitz ist so ausgebildet, dass ihre Befestigungsschraube 53 etwa in Umfangsrichtung weist. Bedarfsweise kann die Schneidplatte 51 auch als Lateralplatte eingebaut sein, was Vorteile hinsichtlich der Ausbildung des Werkzeugskörpers 2 hat. Dieser wird dann im Bereich des betreffenden Plattensitzes weniger geschwächt. Die Befestigungsschraube 53 weist dann etwa in Axialrichtung.

Bei einem insbesondere als Fräswerkzeug dienenden Zerspanungswerkzeug 1 sind wenigstens zwei Schneidplatten 14, 15 vorgesehen, die in direkter Anlage miteinander stehen und sich somit gegenseitig abstützen. Durch die direkte Anlage zwischen den Schneidplatten 14, 15 wird eine besonders einfache Gestaltung des Plattensitzes und eine Vollzahnigkeit bereits mit den Schneidplatten einer einzigen Spannut möglich. Dies gestattet hohe Zerspanungsleistungen.

## Patentansprüche

1. Zerspanungswerkzeug (1), insbesondere zur Fräsbearbeitung,
mit einem Werkzeugkörper (2), an dem mindestens zwei einander benachbarte Plattensitze (7, 8) für Schneidplatten (14, 15) ausgebildet sind, die jeweils eine Grundfläche (18, 28), eine Vorderfläche (17, 27) und sich zwischen der Grundfläche (18, 28) und der Vorderfläche (17, 27) erstreckende Seitenflächen (20, 32) sowie Schneidkanten (37', 37) aufweisen,
wobei die Plattensitze (7, 8) so angeordnet sind, dass sich die Schneidplatten (14, 15) gegenseitig mit ihrer Seitenflächen (20, 32) zumindest bereichsweise (35) berühren, wenn die Schneidplatten (14, 15) an ihren Plattensitzen (7, 8) befestigt sind, **dadurch gekennzeichnet,**
**dass** sich die Schneidkanten (37', 37) benachbarter, sich gegenseitig abstützender Schneidplatten (14, 15) einander überschneiden.

2. Zerspanungswerkzeug nach Anspruch 1, **dadurch gekennzeichnet, dass** die benachbarten Plattensitze (7, 8) Auflageflächen (24, 26) aufweisen, die bezüglich der Umfangsrichtung in einem Abstand zueinander angeordnet sind.

3. Zerspanungswerkzeug nach Anspruch 2, **dadurch gekennzeichnet, dass** der Abstand geringer ist, als die zwischen der Grundfläche (28) und der Vorderfläche (27) zu messende Dicke der tiefer sitzenden Schneidplatte (15).

4. Zerspanungswerkzeug nach Anspruch 1, **dadurch gekennzeichnet, dass** wenigstens eine der Seitenflächen (32) wenigstens einer der Schneidplatten (15) in zwei Bereiche (35, 36) unterteilt ist, von denen einer (35) als Anlagebereich dient.

5. Zerspanungswerkzeug nach Anspruch 4, **dadurch gekennzeichnet, dass** der als Anlagefläche dienende Bereich (35) mit der Vorderfläche (27) einen stumpfen Winkel einschließt.

6. Zerspanungswerkzeug nach Anspruch 5, **dadurch gekennzeichnet, dass** die mit der Anlagefläche in Berührung kommenden Seitenfläche (20) der anderen Schneidplatte (14) mit der Grundfläche (18) einen stumpfen Winkel einschließt, der mit dem stumpfen Winkel im Wesentlichen übereinstimmt, den die Anlagefläche mit der Vorderfläche (27) einschließt.

7. Zerspanungswerkzeug nach Anspruch 1, **dadurch gekennzeichnet, dass** die Schneidplatten (14, 15) einander in Axialrichtung gegenseitig abstützend angeordnet sind, so dass die Umfangsschneidkanten (37', 37) der Schneidplatten (14, 15) einander überlappen und gemeinsam eine lückenlose Umfangsschneide definieren.

8. Zerspanungswerkzeug nach Anspruch 1, **dadurch gekennzeichnet, dass** die Schneidplatten (41, 14) einander in Radialrichtung gegenseitig zumindest teilweise abstützend angeordnet sind, so dass die Stirnschneidkanten (46, 47) der Schneidplatten (41, 14) einander überlappen und gemeinsame eine lückenlose Stirnschneide definieren.

9. Zerspanungswerkzeug nach Anspruch 1, **dadurch gekennzeichnet, dass** die Schneidplatten (41, 14, 15) miteinander in Linienberührung gehalten sind.

10. Zerspanungswerkzeug nach Anspruch 1, **dadurch gekennzeichnet, dass** die Schneidplatten (41, 14, 15) miteinander in Flächenberührung gehalten sind.

## Claims

1. A cutting tool (1), especially for milling,
having a tool body (2), on which there are formed at least two mutually adjacent tip seats (7, 8) for cutting tips (14, 15), which each comprise a base (18, 28), a front face (17, 27) and side faces (20, 32) extending between the base (18, 28) and the front face (17, 27), together with cutting edges (37', 37),
the tip seats (7, 8) being so arranged that the side faces (20, 32) of the cutting'tips (14, 15) touch one another at least in places (35) if the cutting tips (14, 15) are fastened to their tip seats (7, 8),
**characterised in that**
the cutting edges (37', 37) of adjacent, mutually supporting cutting tips (14, 15) overlap one another.

2. A cutting tool according to claim 1, **characterised in that** the adjacent tip seats (7, 8) comprise locating surfaces (24, 26) which are arranged spaced from one another relative to the circumferential direction.

3. A cutting tool according to claim 2, **characterised in that** the spacing is smaller than the thickness of the lower cutting tip (15), which thickness is to be measured between the base (28) and the front face (27).

4. A cutting tool according to claim 1, **characterised in that** at least one of the side faces (32) of at least one of the cutting tips (15) is subdivided into two zones (35, 36), of which one (35) serves as a bearing zone.

5. A cutting tool according to claim 4, **characterised in that** the zone (35) serving as a bearing face forms an obtuse angle with the front face (27).

6. A cutting tool according to claim 5, **characterised in that** the side face (20), coming into contact with the bearing face, of the other cutting tip (14) forms an obtuse angle with the base (18), which angle substantially matches the obtuse angle which the bearing face forms with the front face (27).

7. A cutting tool according to claim 1, **characterised in that** the cutting tips (14, 15) are arranged so as to provide mutual support for one another in the axial direction, such that the circumferential cutting edges (37', 37) of the cutting tips (14, 15) overlap one another and together define a gap-free circumferential cutting edge.

8. A cutting tool according to claim 1, **characterised in that** the cutting tips (41, 14) are arranged so as to provide mutual support at least in part in the radial direction, such that the end cutting edges (46, 47) of the cutting tips (41, 14) overlap one another and together define a gap-free end cutting edge.

9. A cutting tool according to claim 1, **characterised in that** the cutting tips (41, 14, 15) are held in linear contact with one another.

10. A cutting tool according to claim 1, **characterised in that** the cutting tips (41, 14, 15) are held in planar contact with one another.

## Revendications

1. Outil de coupe (1), notamment outil de fraisage, comprenant
un corps d'outil (2) sur lequel sont aménagés au moins deux logements de plaquette (7, 8) contigus pour des plaquettes de coupe (14, 15), qui présentent chacune une surface de base (18, 28), une surface antérieure (17, 27), des surfaces latérales (20, 32) qui s'étendent entre la surface de base (18, 28) et la surface antérieure (17, 27), ainsi que des arêtes de coupe (37', 37),
les logements de plaquettes (7, 8) étant disposés de manière telle, que les plaquettes de coupe (14, 15) se touchent mutuellement au moins localement (35) avec leurs surfaces latérales (20, 32) lorsque lesdites plaquettes de coupe (14, 15) sont fixées dans leur logement de plaquette (7, 8),
**caractérisé par le fait que**
les arêtes de coupe (37', 37) de plaquettes de coupe (14, 15) contiguës en appui l'une sur l'autre se chevauchent.

2. Outil de coupe selon la revendication 1, **caractérisé par le fait que** les logements de plaquettes (7, 8) contigus présentent des surfaces d'appui (24, 26) qui sont disposées à une certaine distance les unes des autres dans la direction périphérique.

3. Outil de coupe selon la revendication 2, **caractérisé par le fait que** la distance est inférieure à l'épaisseur mesurée entre la surface de base (28) et la surface antérieure (27) de la plaquette de coupe (15) la plus en retrait.

4. Outil de coupe selon la revendication 1, **caractérisé par le fait qu'**au moins une des surfaces latérales (32) d'au moins une des plaquettes de coupe (15) est subdivisée en deux zones (35, 36) parmi lesquelles l'une (35) sert de zone d'appui.

5. Outil de coupe selon la revendication 4, **caractérisé par le fait que** la zone (35) servant de surface d'appui forme un angle obtus avec la surface antérieure (27).

6. Outil de coupe selon la revendication 5, **caractérisé par le fait que** la surface latérale (20) de l'autre plaquette de coupe (14) venant en contact avec la surface d'appui forme avec la surface de base (18) un angle obtus qui correspond essentiellement à l'angle obtus que forme la surface d'appui avec la surface antérieure (27).

7. Outil de coupe selon la revendication 1, **caractérisé par le fait que** les plaquettes de coupe (14, 15) sont disposées en appui réciproque l'une sur l'autre dans la direction axiale de telle sorte que les arêtes de coupe périphériques (37', 37) des plaquettes de coupe (14, 15) se chevauchent mutuellement et forment ensemble une arête de coupe périphérique continue.

8. Outil de coupe selon la revendication 1, **caractérisé par le fait que** les plaquettes de coupe (41, 14) sont disposées au moins partiellement en appui réciproque l'une sur l'autre dans la direction radiale de telle sorte que les arêtes de coupe frontales (46, 47) des plaquettes de coupe (41, 14) se chevauchent mutuellement et forment ensemble une arête de coupe frontale continue.

9. Outil de coupe selon la revendication 1, **caractérisé par le fait que** les plaquettes de coupe (41, 14, 15) sont tenues en contact linéaire entre elles.

10. Outil de coupe selon la revendication 1, **caractérisé par le fait que** les plaquettes de coupe (41, 14, 15) sont maintenues ensemble avec contact surfacique.
